(19) **Europäisches Patentamt / European Patent Office / Office européen des brevets**

(11) **EP 4 635 926 A1**

(12) **EUROPEAN PATENT APPLICATION**

(43) Date of publication:
22.10.2025   Bulletin 2025/43

(21) Application number: 24305607.4

(22) Date of filing: 18.04.2024

(51) International Patent Classification (IPC):
C04B 24/42 (2006.01)    C04B 28/14 (2006.01)
B28B 19/00 (2006.01)    B32B 13/04 (2006.01)
C04B 111/27 (2006.01)

(52) Cooperative Patent Classification (CPC):
(C-Sets available)
C04B 28/14; B28B 19/0092; B32B 13/04;
C04B 24/42; B32B 2250/02; B32B 2250/03;
B32B 2307/7246; C04B 2111/00413;
C04B 2111/0062; C04B 2111/27    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: SAINT-GOBAIN PLACO
92400 Courbevoie (FR)

(72) Inventors:
• DI MAURO, Eduardo
  92400 Courbevoie (FR)
• DECABOOTER, Célia
  92400 Courbevoie (FR)
• MORO, Solenn
  93300 Aubervilliers (FR)
• SAINGIER, Guillaume
  92400 Courbevoie (FR)

(74) Representative: Saint-Gobain Recherche
41 Quai Lucien Lefranc
93300 Aubervilliers (FR)

(54) **METHOD FOR MANUFACTURING A MOISTURE-RESISTANT PLASTERBOARD**

(57)    The present invention relates to a method for manufacturing a moisture-resistant plasterboard, and to a moisture-resistant plasterboard made by such method.

EP 4 635 926 A1

(52) Cooperative Patent Classification (CPC): (Cont.)

C-Sets
**C04B 28/14, C04B 24/42**

## Description

Technical field

The present invention relates to a method for manufacturing a moisture-resistant plasterboard, and to a moisture-resistant plasterboard made by such method.

Technical background

Plasterboards are panels comprising a layer of gypsum between two facing sheets generally made of a paper liner. Industrially, the method for the manufacture of plasterboards comprises three main stages: the forming, the setting and the drying. During the stage of forming of the plasterboard, a slurry is continuously prepared in a mixer starting from stucco, water and other specific ingredients in order to adjust the properties of the composition and/or of the final product. For instance, a foaming agent is usually added in the gypsum slurry to decrease the density of the resulting plasterboard. The composition is subsequently cast continuously over a first liner entrained by a conveyor belt in order to form the board. After the edges of the first liner have been folded over, a second liner is introduced. Usually, an extruder is used to flatten the second liner over the composition, smooth the surfaces and adjust the thickness of the plasterboard to the desired value. In some processes, an additional gypsum layer, called roller coating, can be inserted between the first liner and the main gypsum core, and another one usually also between the second liner and the main gypsum core. Such roller coatings usually have a density greater than that of the main gypsum core and allow an enhancement of the mechanical properties of the plasterboard.

In order to impart moisture resistance to the plasterboards, it is commonly known to add a silicone in the gypsum slurry. Such silicone has however several drawbacks, such as cyclic shortages, defoaming effect, and formation of silica dust in the dryer. It is therefore desirable to find a strategy allowing reducing the amount of silicone used in plasterboards, while maintaining the same moisture resistance.

Summary

In this context, the inventors have discovered that the above technical problem could be satisfied by adding or forming a silicone emulsion into the gypsum slurry intended to form the roller coating(s). They demonstrated that the addition of a silicone in the roller coating(s) instead of the main gypsum core allowed reducing the amount of silicone used in the plasterboard. Interestingly, they also showed that the emulsified form of the silicone was crucial to reach the optimal efficiency of the silicone. When a foam is added in the main gypsum core, another advantage allowed by the addition of silicone in the roller coatings and not in the main gypsum core is avoiding direct contact between such foam and the silicone. Indeed, silicones tend to destabilize the foam and thus the formation of pores in the plasterboard.

Thus, the present invention relates to a method for manufacturing a moisture-resistant plasterboard comprising:

- casting a first slurry comprising water and stucco on a first liner, so as to form a first wet gypsum layer,
- casting a second slurry comprising water and stucco on the first wet gypsum layer, so as to form a second wet gypsum layer,
- providing a second liner optionally coated with a third wet gypsum layer, on said second wet gypsum layer, thereby forming a wet plasterboard, and
- drying the wet plasterboard, so as to form the plasterboard,

wherein:

when present, said third wet gypsum layer is formed by casting a third slurry comprising water and stucco on said second liner;
when the third wet gypsum layer is not present, then the first slurry further comprises a silicone emulsion; and
when the third wet gypsum layer is present, then at least one of the first and third slurry further comprises a silicone emulsion.

In one embodiment, said third wet gypsum layer is not present. In such embodiment, the first slurry further comprises said silicone emulsion and is preferably formed by adding a silicone emulsion in a mixture comprising water and stucco.

In another one embodiment, said third wet gypsum layer is present. In some embodiments, the first slurry further comprises a silicone emulsion and is preferably formed by adding a silicone emulsion in a mixture comprising water and stucco. In some embodiments, the third slurry further comprises a silicone emulsion and is preferably formed by adding a silicone emulsion in a mixture comprising water and stucco.

When silicone is present in the third slurry, the content of silicone in the third slurry is advantageously from 0.1 to 1.2 wt%, preferably from 0.3 to 1 wt%, relative to the dry weight of stucco in the third slurry.

When silicone is present in the first slurry, the content of silicone in the first slurry is advantageously from 0.1 to 1.2 wt%, preferably from 0.3 to 1 wt%, relative to the dry weight of stucco in the first slurry.

In a preferred embodiment, the second slurry does not comprise silicone.

In some embodiments, the silicone of said silicone emulsion is polymethylhydrogensiloxane (PMHS).

In some embodiments, the d50 of the silicone droplets in the silicone emulsion is from 1 to 100 $\mu$m, preferably from 1 to 50 $\mu$m.

In some embodiments, the content of stucco in each of the first slurry, second slurry, and when present third slurry, is independently at least 70 wt%, relative to the total dry content of the first, second, and third slurry respectively.

In some embodiments, the weight ratio of water to stucco in each of the first slurry, second slurry, and when present third slurry, is independently:

- at least 0.19 and
- at most 1, preferably at most 0.85, more preferably at most 0.80, even more preferably at most 0.75.

In some embodiments, each of the first slurry, second slurry, and when present third slurry, further comprises independently one or more ingredients selected from foaming agents, dispersants, adhesion agents, setting accelerators, setting retarders, anti-burning agents, anti-sag agents, fire-resistant agents, anti-shrinkage agents, biocidal agents, reinforcing agents and Volatile Organic Compound trapping agents.

In some embodiments, the second slurry further comprises a foaming agent, preferably in an amount from 0.003 to 0.2 wt%, relative to the dry weight of stucco in the second slurry.

In some embodiments, each of the first and second liners is, independently from each other, a paper liner, a cardboard liner, or a glass veil, preferably both are paper liners.

The present invention also relates to a moisture-resistant plasterboard, preferably made by a method as defined herein, comprising:

- a first liner,
- a first gypsum layer on the first liner,
- a second gypsum layer on the first gypsum layer,
- optionally a third gypsum layer on the second gypsum layer, and
- a second liner on the second gypsum layer, or if present, on the third gypsum layer,

wherein:

when the third gypsum layer is not present, then the first gypsum layer comprises a cross-linked silicone;
when the third gypsum layer is present, then at least one of the first and third gypsum layer comprises a cross-linked silicone.

Preferably, the second gypsum layer does not comprise cross-linked silicone.

Detailed description

In the present application, unless otherwise mentioned, the weight content of a component is based on the weight of the component itself, and therefore, to its weight in dry extract, when used for instance diluted in a dispersion or solution.

As used herein, the term "gypsum" encompasses:

- calcium sulphate dihydrate ($CaSO_4$, $2H_2O$), which corresponds to a set gypsum,
- calcium sulphate hemihydrate ($CaSO_4$, $\frac{1}{2} H_2O$), which corresponds to a non-set gypsum (also called "gypsum hemihydrate" or "plaster"), and/or
- a mixture thereof, which in particular corresponds to a gypsum which is not completely set.

As used herein, the term "stucco" refers to any natural or synthetic stucco, which consists of

- or essentially consists of - calcium sulphate hemihydrate ($CaSO_4$, $\frac{1}{2} H_2O$).

Calcium sulphate hemihydrate can be alpha calcium sulfate hemihydrate ("$\alpha$-hemihydrate") or beta calcium sulfate hemihydrate ("β-hemihydrate"), preferably beta calcium sulfate hemihydrate.

Alpha calcium sulfate hemihydrate is produced by calcination of gypsum in an atmosphere saturated with water vapor, and beta calcium sulfate hemihydrate is produced under conditions where the partial pressure of water vapor is low.

The expression "plasterboard" (or equivalently: "gypsum-based panel" or "gypsum board" or "drywall" or "wallboard") denotes for example the finished product formed by set gypsum but also a plasterboard in the course of manufacture in which the gypsum is not completely set.

As used herein, the term "silicone" typically refers to a siloxane or polysiloxanes compound. Preferably, the silicone is chosen among polyalkylhydrogenosiloxanes. Polyalkylhydrogenosiloxanes are well-known to the skilled artisan and are in particular described in US 5,135,805, US 5,624,418 or WO 99/50200. Polyalkylhydrogenosiloxanes can in particular comprise the following repeating unit: -[SiH(R')-O]- wherein R' is a C1-C4 alkyl such as a methyl.

More preferably, the silicone is chosen among polymethylhydrogenosiloxanes (PMHS).

Unless otherwise specified, the word "silicone" as used herein refers to a non-cross-linked silicone, or a partially cross-linked silicone. In particular, when referring to the silicone added to a slurry, such silicone is not cross-linked and starts cross-linking once in contact with water during implementation of the process of manufacturing the plasterboard.

As used herein, a "silicone emulsion" typically refers to a dispersion of silicone droplets in water. The d50 of the silicone droplets in a silicone emulsion is advantageously from 1 to 100 μm, preferably from 1 to 50 μm. The median size (i.e. "d50") indicates the value for which 50% of the droplets - by volume - have a size less than or equal to this value, and 50% of the droplets - by volume - have a size greater than this value. Such median size can be determined by laser diffraction methods.

The d50 of the silicone droplets can be controlled by adjusting the rate, and time of the stirring or shearing, as well as the silicone concentration. Typically, for a given silicone content in the emulsion, a higher shear rate implies a smaller d50.

Advantageously, the content of stucco in the first slurry is at least 70 wt% (for instance at least 80 wt%, at least 90 wt%, at least 95 wt% or at least 98 wt%), relative to the total dry content of the first slurry.

Advantageously, the content of stucco in the second slurry is at least 70 wt% (for instance at least 80 wt%, at least 90 wt%, at least 95 wt% or at least 98 wt%), relative to the total dry content of the second slurry.

When present, the content of stucco in the third slurry is advantageously at least 70 wt% (for instance at least 80 wt%, at least 90 wt%, at least 95 wt% or at least 98 wt%), relative to the total dry content of the third slurry.

Advantageously, the weight ratio of water to stucco (such ratio being also named "water gauge") in the first slurry is:

- at least 0.19, for instance at least 0.30, at least 0.40, or at least 0.50; and
- preferably at most 1, more preferably at most 0.85, even more preferably at most 0.80, for instance at most 0.75, or even at most 0.60.

In a particular embodiment, the weight ratio of water to stucco in the first slurry is from 0.45 to 0.85, preferably from 0.55 to 0.80, more preferably from 0.65 to 0.75.

Advantageously, the weight ratio of water to stucco in the second slurry is:

- at least 0.19, for instance at least 0.30, at least 0.40, or at least 0.50; and
- preferably at most 1, more preferably at most 0.85, even more preferably at most 0.80, for instance at most 0.75, or even at most 0.60.

In a particular embodiment, the weight ratio of water to stucco in the second slurry is from 0.45 to 0.85, preferably from 0.55 to 0.80, more preferably from 0.65 to 0.75.

When present, the weight ratio of water to stucco in the third slurry is advantageously:

- at least 0.19, for instance at least 0.30, at least 0.40, or at least 0.50; and
- preferably at most 1, more preferably at most 0.85, even more preferably at most 0.80, for instance at most 0.75, or even at most 0.60.

In a particular embodiment, the weight ratio of water to stucco in the third slurry is from 0.45 to 0.85, preferably from 0.55 to 0.80, more preferably from 0.65 to 0.75.

Each of the first slurry, second slurry and when present, third slurry, described herein may further comprise ingredients, usually used in the field of plasterboard. Such ingredients are used to tune the physico-chemical properties of each corresponding gypsum layers and/or of the plasterboard comprising such gypsum layers.

Examples of such ingredients include, but are not limited to, adhesion agents, dispersants, foaming agents, setting accelerators, setting retarders, anti-burning agents, anti-sag agents, fire-resistant agents, anti-shrinkage agents, biocidal agents, reinforcing agents or Volatile Organic Compound trapping agents.

Examples of adhesion agents include in particular, starches such as acid-hydrolyzed or pre-gelatinized starches, polyvinyl acetate, polyvinyl alcohol, dextrins, or a flour such as corn, wheat or sorghum flour.

Examples of dispersants include in particular, polynaphthalene sulfonate, polycarboxylate ether, or polyaryl ether.

Examples of foaming agents include in particular, alkyl sulfate or alkyl ether sulfate. Examples of setting accelerators include in particular heat resistant accelerator, such as ground gypsum encapsuled within dextrose monohydrate.

Examples of setting retarders include in particular natural proteins.

An example of anti-burning agents includes in particular dextrose monohydrate.

Examples of anti-sag agents include in particular sodium trimetaphosphate or tartaric acid. Examples of fire-resistant agents include in particular vermiculite, clay, glass fibers or mineral wool (e.g. glass wool).

Examples of anti-shrinkage agents include in particular vermiculite, clay, or microsilica. Examples of biocidal agents include in particular carbamates, such as 3-iodoprop-2-yn-1-yl butylcarbamate, or pyrothione complexes.

Examples of reinforcing agents include in particular glass fibers.

In an embodiment where the third gypsum slurry is not present, the method comprises:

- casting a first slurry comprising water and stucco on a first liner, so as to form a first wet gypsum layer,
- casting a second slurry comprising water and stucco on the first wet gypsum layer, so as to form a second wet gypsum layer,
- providing a second liner on said second wet gypsum layer, thereby forming a wet plasterboard, and
- drying the wet plasterboard, so as to form the plasterboard,

wherein the first slurry further comprises a silicone emulsion.

In such embodiment, the content of silicone (based on dry extract), in the first slurry is advantageously from 0.1 to 1.2 wt%, preferably from 0.3 to 1 wt%, relative to the dry weight of stucco in the first slurry.

The second slurry may comprise or not a silicone. Preferably, the second slurry does not comprise a silicone. Advantageously, the second slurry further comprises a foaming agent (e.g. alkyl sulfate or alkyl ether sulfate), preferably in an amount (based on dry extract of foaming agent) from 0.003 to 0.2 wt%, relative to the dry weight of stucco in the second slurry. Usually, a foam is formed by mixing such foaming agent, water and air, and is added to a mixture comprising stucco and water, in order to form the second slurry.

In some embodiments, the first slurry further comprising a silicone emulsion is formed by:

a) forming a mixture comprising silicone, water and stucco (and optionally one or more ingredients as described above) using a non-emulsified silicone, and

b) stirring or shearing the resulting mixture of step a), under conditions allowing the formation of a first slurry comprising a silicone emulsion.

Preferably, the first slurry further comprising a silicone emulsion is formed by adding a silicone emulsion (referred to as "silicone emulsion S0" hereinafter) in a mixture comprising water and stucco. Said mixture comprising water and stucco may further comprise one or more ingredients as described above.

The silicone emulsion S0 is usually formed by stirring or shearing a mixture comprising silicone and water. The silicone emulsion S0 advantageously comprises from 5 to 60 % by weight of silicone, and from 40 to 95 % by weight of water, relative to the total weight of silicone emulsion. Preferably, said silicone and water represent together at least 90 wt%, more preferably at least 95 wt%, or even at least 98 wt%, for instance at least 99 wt% of the total weight of silicone emulsion S0. The silicone emulsion S0 may further comprise an emulsion stabilizer (typically a surfactant), for instance in a content from 0.01 to 10 % relative to the total weight of silicone emulsion S0.

Examples of emulsion stabilizers include anionic, non-ionic, cationic and amphoteric surfactants. Suitable anionic surfactants examples include alkali metal soaps of higher fatty acids, alkylaryl sulphonates such as sodium dodecyl benzene sulphonate, long chain fatty alcohol sulphates, olefin sulphates and olefin sulphonates, sulphated monoglycerides, sulphated esters, sulphonated ethoxylated alcohols, sulphosuccinates, alkane sulphonates, phosphate esters, alkyl isothionates, alkyl taurates, and alkyl sarcosinates. Suitable cationic surfactants examples include alkylamine salts, quaternary ammonium salts, sulphonium salts, and phosphonium salts. Suitable non-ionic surfactants examples include polyvinyl alcohol, condensates of ethylene oxide with long chain fatty alcohols or fatty acids such as a C12-16 alcohol, condensates of ethylene oxide with an amine or an amide, condensation products of ethylene and propylene oxide, esters of glycerol, sucrose, sorbitol, fatty acid alkylol amides, sucrose esters, fluoro-surfactants, and fatty amine oxides. Suitable amphoteric surfactants examples include imidazoline compounds, alkylaminoacid salts, and betaines. Preferred examples of emulsion stabilizers are alkyl ether sulfate, alkyl sulfate, or polyvinyl alcohol.

In an embodiment where the third gypsum slurry is not present, the method of the invention provides a moisture-resistant plasterboard comprising:

- a first liner,
- a first gypsum layer (obtained from said first wet gypsum layer) on the first liner,
- a second gypsum layer (obtained from said second wet gypsum layer) on the first gypsum layer, and
- a second liner on the second gypsum layer,

wherein the first gypsum layer comprises a cross-linked silicone.

The content of cross-linked silicone in the first gypsum layer is substantially the same as the content of silicone (i.e. non cross-linked) in the corresponding first slurry. The content of cross-linked silicone in the first gypsum layer is advantageously from 0.1 to 1.2 wt%, preferably from 0.3 to 1 wt%, relative to the dry weight of stucco in the first gypsum layer.

The second gypsum layer may comprise or not a cross-linked silicone. Preferably, the second gypsum layer does not comprise a cross-linked silicone.

Typically, the density of the first gypsum layer is from 800 kg/m3 to 1600 kg/m3, preferably from 900kg/m3 to 1200 g/m3.

Typically, the density of the second gypsum layer is from 250kg/m3 to 1150kg/m3, preferably from 400kg/m3 to 960kg/m3.

Preferably, the density of the first gypsum layer is higher than the density of the second gypsum layer (preferably, higher by at least 5%, and usually by at most 40%, for instance by 15 to 25%).

Typically, the thickness of the first gypsum layer is from 0.3 mm to 1.2 mm, preferably from 0.5 mm to 1 mm.

Typically, the thickness of the second gypsum layer is from 5 mm to 25.5 mm, preferably from 6.5 mm to 12.4 mm.

In an embodiment where the third gypsum slurry is present, the method comprises:

- casting a first slurry comprising water and stucco on a first liner, so as to form a first wet gypsum layer,
- casting a second slurry comprising water and stucco on the first wet gypsum layer, so as to form a second wet gypsum layer,
- providing a second liner coated with a third wet gypsum layer, on said second wet gypsum layer, thereby forming a wet plasterboard, and
- drying the wet plasterboard, so as to form the plasterboard,

wherein:

said third wet gypsum layer is formed by casting a third slurry comprising water and stucco on said second liner; and at least one of the first and third slurry further comprises a silicone emulsion.

It is understood that the second liner coated with a third wet gypsum layer is provided on the second wet gypsum layer such that the third wet gypsum layer is in contact with the second wet gypsum layer.

In an embodiment, only the first slurry further comprises a silicone emulsion. In such embodiment, the third slurry typically does not comprise a silicone emulsion, or even does not comprise a silicone.

The first slurry further comprising a silicone emulsion may be formed by:

a) forming a mixture comprising silicone, water and stucco (and optionally one or more ingredients as described above) using a non-emulsified silicone, and
b) stirring or shearing the resulting mixture of step a), under conditions allowing the formation of a first slurry comprising a silicone emulsion.

Preferably, the first slurry further comprising a silicone emulsion is formed by adding a silicone emulsion (referred to as "silicone emulsion S0" hereinafter) in a mixture comprising water and stucco. Said mixture comprising water and stucco may further comprise one or more ingredients as described above.

The silicone emulsion S0 is usually formed by stirring or shearing a mixture comprising silicone and water. The silicone emulsion S0 advantageously comprises from 5 to 60 % by weight of silicone, and from 40 to 95 % by weight of water, relative to the total weight of silicone emulsion. Preferably, said silicone and water represent together at least 90 wt%, more preferably at least 95 wt%, or even at least 98 wt%, for instance at least 99 wt% of the total weight of silicone emulsion S0. The silicone emulsion S0 may further comprise an emulsion stabilizer (chosen typically among those described above), for instance in a content from 0.01 to 10 % relative to the total weight of silicone emulsion S0.

The content of silicone (based on dry extract) in the first slurry is advantageously from 0.1 to 1.2 wt%, preferably from 0.3 to 1 wt%, relative to the dry weight of stucco in the first slurry. The second slurry may comprise or not a silicone. Preferably, the second slurry does not comprise a silicone.

In another embodiment, only the third slurry further comprises a silicone emulsion. In such embodiment, the first slurry typically does not comprise a silicone emulsion, or even does not comprise a silicone.

The third slurry further comprising a silicone emulsion may be formed by:

a) forming a mixture comprising silicone, water and stucco (and optionally one or more ingredients as described above) using a non-emulsified silicone, and

b) stirring or shearing the resulting mixture of step a), under conditions allowing the formation of a third slurry comprising a silicone emulsion.

Preferably, the third slurry further comprising a silicone emulsion is formed by adding a silicone emulsion (referred to as "silicone emulsion S0" hereinafter) in a mixture comprising water and stucco. Said mixture comprising water and stucco may further comprise one or more ingredients as described above.

The silicone emulsion S0 is usually formed by stirring or shearing a mixture comprising silicone and water. The silicone emulsion S0 advantageously comprises from 5 to 60 % by weight of silicone, and from 40 to 95 % by weight of water, relative to the total weight of silicone emulsion. Preferably, said silicone and water represent together at least 90 wt%, more preferably at least 95 wt%, or even at least 98 wt%, for instance at least 99 wt% of the total weight of silicone emulsion S0. The silicone emulsion S0 may further comprise an emulsion stabilizer (chosen typically among those described above), for instance in a content from 0.01 to 10 % relative to the total weight of silicone emulsion S0.

The content of silicone (based on dry extract), in the third slurry is advantageously from 0.1 to 1.2 wt%, preferably from 0.3 to 1 wt%, relative to the dry weight of stucco in the third slurry. The second slurry may comprise or not a silicone. Preferably, the second slurry does not comprise a silicone.

In a preferred embodiment, both the first and third slurry further comprise a silicone emulsion.

Each of the first and third slurry further comprising a silicone emulsion may be formed by:

a) forming a mixture comprising silicone, water and stucco (and optionally one or more ingredients as described above) using a non-emulsified silicone, and

b) stirring or shearing the resulting mixture of step a), under conditions allowing the formation of a first or third slurry comprising a silicone emulsion.

Preferably, each of the first and third slurry further comprising a silicone emulsion are formed by adding a silicone emulsion (referred to as "silicone emulsion S0" hereinafter) in a mixture comprising water and stucco. Said mixtures comprising water and stucco may further comprise one or more ingredients as described above.

The silicone emulsion S0 is usually formed by stirring or shearing a mixture comprising silicone and water. The silicone emulsion S0 advantageously comprises from 5 to 60 % by weight of silicone, and from 40 to 95 % by weight of water, relative to the total weight of silicone emulsion. Preferably, said silicone and water represent together at least 90 wt%, more preferably at least 95 wt%, or even at least 98 wt%, for instance at least 99 wt% of the total weight of silicone emulsion S0. The silicone emulsion S0 may further comprise an emulsion stabilizer (chosen typically among those described above), for instance in a content from 0.01 to 10 % relative to the total weight of silicone emulsion S0.

The content of silicone (based on dry extract) in the first slurry is advantageously from 0.1 to 1.2 wt%, preferably from 0.3 to 1 wt%, relative to the dry weight of stucco in the first slurry. The content of silicone (based on dry extract) in the third slurry is advantageously from 0.1 to 1.2 wt%, preferably from 0.3 to 1 wt%, relative to the dry weight of stucco in the third slurry.

The first and third slurry may be identical or different, in terms of composition. In an embodiment, the first and third slurry are identical.

The second slurry may comprise or not a silicone. Preferably, the second slurry does not comprise a silicone. Advantageously, the second slurry further comprises a foaming agent (e.g. alkyl sulfate or alkyl ether sulfate), preferably in an amount (based on dry extract of foaming agent) from 0.003 to 0.2 wt%, relative to the dry weight of stucco in the second slurry. Usually, a foam is formed by mixing such foaming agent, water and air, and is added to a mixture comprising stucco and water, in order to form the second slurry.

In an embodiment where the third gypsum slurry is present, the method of the invention provides a moisture-resistant plasterboard comprising:

- a first liner,
- a first gypsum layer (obtained from said first wet gypsum layer) on the first liner,
- a second gypsum layer (obtained from said second wet gypsum layer) on the first gypsum layer,
- a third gypsum layer (obtained from said third wet gypsum layer) on the second gypsum layer, and

- a second liner on the third gypsum layer,

wherein at least one of the first and third gypsum layer comprises a cross-linked silicone.

In an embodiment, only the first gypsum layer comprises a cross-linked silicone.

In another embodiment, only the third gypsum layer comprises a cross-linked silicone.

In a preferred embodiment, both the first and third gypsum layer comprise a cross-linked silicone.

The second gypsum layer may comprise or not a cross-linked silicone. Preferably, the second gypsum layer does not comprise a cross-linked silicone.

The content of cross-linked silicone in the first gypsum layer is substantially the same as the amount of silicone (i.e. non cross-linked) in the corresponding first slurry. The content of cross-linked silicone in the first gypsum layer is advantageously from 0.1 to 1.2 wt%, preferably from 0.3 to 1 wt%, relative to the dry weight of stucco in the first gypsum layer.

The content of cross-linked silicone in the third gypsum layer is substantially the same as the amount of silicone (i.e. non cross-linked) in the corresponding third slurry. The content of cross-linked silicone in the third gypsum layer is advantageously from 0.1 to 1.2 wt%, preferably from 0.3 to 1 wt%, relative to the dry weight of stucco in the third gypsum layer.

Typically, the density of each of the first and third gypsum layer is independently from 800 kg/m3 to 1600 kg/m3, preferably from 900 kg/m3 to 1200 kg/m3.

Typically, the density of the second gypsum layer is from 250 kg/m3 to 1150 kg/m3, preferably from 400 kg/m3 to 960 kg/m3.

Preferably, the density of each of the first and third gypsum layer is higher than the density of the second gypsum layer (preferably, higher by at least 5%, and usually by at most 40%, for instance by 15 to 25%).

Typically, the thickness of the first gypsum layer is from 0.3 mm to 1.2 mm, preferably from 0.5 mm to 1 mm.

Typically, the thickness of the second gypsum layer is from 5 mm to 25.5 mm, preferably from 6.5 mm to 12.4 mm.

Typically, the thickness of the third gypsum layer is from 0.3 mm to 1.2 mm, preferably from 0.5 mm to 1 mm.

The second slurry is typically formed by mixing all the components (stucco, water, and the optional further ingredients) under stirring (or shearing). When the first slurry, and when present third slurry, are formed by adding a silicone emulsion ("S0") to a mixture comprising stucco and water, such mixture is typically stirred (or sheared) before adding the silicone emulsion, and no stirring (or shearing) is advantageously applied after adding the silicone emulsion.

Advantageously, the pH of each of the first slurry, second slurry, and when present third slurry, is independently higher than 6, preferably higher than 7, more preferably higher than 8 (and usually, less than 12).

Each of the first and second liners is usually, independently from each other, a paper liner, a cardboard liner, or a glass veil, preferably both are paper liners.

In the method of the invention, for a given gypsum layer, the setting of gypsum usually takes place as soon as the corresponding gypsum slurry is formed and cast on a liner or on a preceding gypsum layer. Typically, in a "wet gypsum layer", the gypsum is not completely set (i.e. a wet gypsum layer comprises a mixture of calcium sulphate dihydrate and calcium sulphate hemihydrate and water). During the setting, calcium sulphate hemihydrate and water contained in the composition react with each other to form calcium sulphate dihydrate. Such reaction is a hydration reaction.

The setting typically occurs in the absence of external heating, in particular at room temperature. Room temperature typically refers to a temperature comprised between 15°C and 35°C. Since the reaction between calcium sulphate hemihydrate and water is exothermic, the temperature of the wet gypsum layer during setting can be above room temperature.

The setting of each gypsum layer is usually completed just before the drying step. Typically, the wet plasterboard comprises a layer of set gypsum and the water in excess (or "unreacted water").

During the drying step of the method, the water in excess (or "unreacted water") is removed. The drying step is advantageously carried out at a temperature comprised between 85°C and 97°C, more particularly between 90 °C and 95 °C. Such temperature in the drying step refers to the temperature as measured in the gypsum layers of the plasterboard. Dry gypsum layers, comprising a dry set gypsum, are obtained after such step.

Preferably, the method of the invention is carried out under continuous conditions. Under such continuous conditions, the method of the invention typically comprises the following steps:

- continuously casting a first slurry from a mixer on a first liner, so as to form a first wet gypsum layer on said first liner, wherein the first liner is entrained by a conveyor belt (for instance, towards an extruder),
- continuously casting a second slurry from a mixer on the first wet gypsum layer, so as to form a second wet gypsum layer,
- providing a second liner optionally coated with a third wet gypsum layer, on the second wet gypsum layer (for instance, at the extruder), thereby forming a continuous wet plasterboard, and
- cutting and drying the continuous wet plasterboard, so as to obtain a plasterboard,

**EP 4 635 926 A1**

wherein:

when present, said third wet gypsum layer is formed by continuously casting a third slurry comprising water and stucco on said second liner;

when the third wet gypsum layer is not present, then the first slurry further comprises a silicone emulsion (and preferably is continuously formed by adding a silicone emulsion in a mixture comprising water and stucco); and

when the third wet gypsum layer is present, then at least one of the first and third slurry further comprises a silicone emulsion (and preferably is continuously formed by adding a silicone emulsion in a mixture comprising water and stucco).

Under continuous conditions, the second slurry is typically formed by continuously mixing all the components of the second slurry (stucco, water, and the optional further ingredients) under stirring.

When used, the extruder allows to flatten the second liner over the gypsum layers, to smooth the surfaces and adjusts the thickness of the plasterboard to the desired value.

The present invention is illustrated by the following non-limiting examples.

EXAMPLES

Example 1

Three compositions of silicone-containing prisms were prepared.
- Prism 1 (comparative), made of one gypsum layer obtained from an emulsified silicone-containing slurry.

Table 1

| Ingredients | Emulsified silicone-containing slurry |
|---|---|
| Thickness (mm) | 20 |
| Water/stucco weight ratio | 0.70 |
| Silicone* | 0.2 |
| Uncooked acid-hydrolyzed corn starch* | 0.5 |
| Retarder* | 0.065 |
| Heat resistant accelerator* | 0.1 |
| *wt% relative to the dry weight of stucco | |

- Prism 2 (according to the invention), made of three gypsum layers: a top gypsum layer and a bottom gypsum layer, both being obtained from an emulsified silicone-containing slurry, and one central silicone-free gypsum layer.

Table 2

| Ingredients | Top and bottom emulsified silicone-containing slurries | Central silicone-free gypsum layer |
|---|---|---|
| Thickness (mm) | 6 | 8 |
| Water/stucco weight ratio | 0.70 | 0.70 |
| Silicone* | 0.33 | 0 |
| Uncooked acid-hydrolyzed corn starch* | 0.5 | 0.5 |
| Retarder* | 0.065 | 0.065 |
| Heat resistant accelerator* | 0.1 | 0.1 |
| *wt% relative to the dry weight of stucco | | |

- Prism 3 (comparative), made of three gypsum layers: a top silicone-free gypsum layer and a bottom silicone-free gypsum layer, and a central gypsum layer obtained from an emulsified silicone-containing slurry.

Table 3

| Ingredients | Top and bottom silicone-free gypsum layers | Central emulsified silicone-containing slurry |
|---|---|---|
| Thickness (mm) | 6 | 8 |
| Water/stucco weight ratio | 0.70 | 0.70 |
| Silicone* | 0 | 0.5 |
| Uncooked acid-hydrolyzed corn starch* | 0.5 | 0.5 |
| Retarder* | 0.065 | 0.065 |
| Heat resistant accelerator* | 0.1 | 0.1 |
| *wt% relative to the dry weight of stucco | | |

The stucco quantity for each prisms batch was 500 g. The dry additives were pre-mixed with stucco and subsequently added to water. Disintegration took place in a VMI Supertest (2014) blender, at 250rpm for 30s then at 2300rpm for 30s.

The so-obtained slurry was poured in 100 mm x 20 mm x 20 mm prisms. For samples containing more than 1 slurry, each slurry was poured until filling the corresponding thickness (Table 2 and Table 3).

The prisms were demolded after 20 minutes as gypsum setting took place.

The prisms were then dried to allow the evaporation of 70% of the excess water. Prior to the total water absorption (TWA) tests, the prisms were conditioned according to EN 520 (23°C, 50%RH) until constant weight. The prisms were immersed for 2 h in water (25°C). During immersion, the side of the prisms was covered by scotch tape to leave the top and bottom surfaces as the only surfaces exposed to water. The water absorption is computed as:

$$\frac{Mass\ after\ 2\ h - Initial\ Mass}{Initial\ Mass} * 100$$

Table 4

| TWA (%) | 2h | 6h |
|---|---|---|
| Prism 1 | 2.2 | 8.9 |
| Prism 2 | 1.5 | 5.4 |
| Prism 3 | 23.1 | 26.2 |

The results of Table 4 show that the presence of emulsified silicone in the slurries used for top and bottom layers (prism 2) allows to maintain a low absorption water after 6h. On the contrary, when a central emulsified silicone-containing layer between two silicone-free layers (prism 3 - comparative) or only one emulsified silicone-containing layer (prism 1 - comparative) are formed, a higher absorption of water is observed.

Example 2

Four 150x150x12.5 mm samples were prepared following the protocol below:

-    The stucco and the dry additives were added to the water and the liquid additives, and mixed at high shear;
-    Then, a foam was added while being mixed to the slurry, at low shear

The silicone was added under different forms:
- As it is, i.e. as non-emulsified silicone
- After being mixed with water under medium shear for 60s, creating an emulsion with a d50 of 94$\mu$m
- After being mixed with water under high shear for 60s, creating an emulsion with a d50 of 16$\mu$m

Table 5

| Ingredients | Emulsified silicone-containing slurry |
| --- | --- |
| Water/stucco weight ratio | 0.68 |
| Silicone* | 0.2 |
| Uncooked acid-hydrolyzed corn starch* | 0.5 |
| Sulphonate-based dispersant (40 wt% of dry extract)* | 0.24 |
| Retarder* | 0.05 |
| Heat resistant accelerator* | 0.4 |
| Foaming agent (30 wt% of dry extract) * | 0.11 |
| *wt% relative to the dry weight of stucco | |

The results of the total water absorption are shown in the table 3 below:

Table 6

| Silicone form | Non-emulsified silicone | | Silicone emulsion d50=94 $\mu$m | Silicone emulsion d50=16 $\mu$m |
| --- | --- | --- | --- | --- |
| Time of addition | Added before the high shear step | Added after the high shear step | Added after the high shear step | Added after the high shear step |
| TWA(%) | 7.1 | 20.1 | 10.3 | 7.1 |

The results of Table 6 show that the use of a silicone in the form of an emulsion allows reducing the amount of water absorbed by the gypsum sample. Indeed, when a non- emulsified silicone is subjected to high shear rate, an emulsion is created and a low water absorption is obtained. On the contrary, when the silicone is subjected to a low shear rate only, which does not allow to form a well-defined and well-dispersed emulsion, a higher water absorption is observed.
It is also demonstrated a smaller d50 of silicone droplets in the silicone emulsion allows a lower water absorption.

**Claims**

1. A method for manufacturing a moisture-resistant plasterboard comprising:

   - casting a first slurry comprising water and stucco on a first liner, so as to form a first wet gypsum layer,
   - casting a second slurry comprising water and stucco on the first wet gypsum layer, so as to form a second wet gypsum layer,
   - providing a second liner optionally coated with a third wet gypsum layer, on said second wet gypsum layer, thereby forming a wet plasterboard, and
   - drying the wet plasterboard, so as to form the plasterboard,

   wherein:

   when present, said third wet gypsum layer is formed by casting a third slurry comprising water and stucco on said second liner;
   when the third wet gypsum layer is not present, then the first slurry further comprises a silicone emulsion; and
   when the third wet gypsum layer is present, then at least one of the first and third slurry further comprises a silicone emulsion.

2. The method according to claim 1, wherein said third wet gypsum layer is not present.

3. The method according to claim 2, wherein the first slurry further comprising said silicone emulsion is formed by adding a silicone emulsion in a mixture comprising water and stucco.

4. The method according to claim 1, wherein said third wet gypsum layer is present.

5. The method according to claim 4, wherein the first slurry further comprises a silicone emulsion and is preferably formed by adding a silicone emulsion in a mixture comprising water and stucco.

6. The method according to claim 4 or 5, wherein the third slurry further comprises a silicone emulsion and is preferably formed by adding a silicone emulsion in a mixture comprising water and stucco.

7. The method according to claim 6, wherein the content of silicone in the third slurry is from 0.1 to 1.2 wt%, preferably from 0.3 to 1 wt%, relative to the dry weight of stucco in the third slurry.

8. The method according to any one of claims 1 to 7, wherein the content of silicone in the first slurry is from 0.1 to 1.2 wt%, preferably from 0.3 to 1 wt%, relative to the dry weight of stucco in the first slurry.

9. The method according to any one of claims 1 to 8, wherein the second slurry does not comprise silicone.

10. The method according to any one of claims 1 to 9, wherein the silicone of said silicone emulsion is polymethylhydrogensiloxane (PMHS).

11. The method according to any one of claims 1 to 10, wherein the d50 of the silicone droplets in the silicone emulsion is from 1 to 100 $\mu$m, preferably from 1 to 50 $\mu$m.

12. The method according to any one of claims 1 to 11, wherein the second slurry further comprises a foaming agent, preferably in an amount from 0.003 to 0.2 wt%, relative to the dry weight of stucco in the second slurry.

13. The method according to any one of claims 1 to 12, wherein each of the first and second liners is, independently from each other, a paper liner, a cardboard liner, or a glass veil, preferably both are paper liners.

14. A moisture-resistant plasterboard, preferably made by a method as defined in any one of claims 1 to 13, comprising:

- a first liner,
- a first gypsum layer on the first liner,
- a second gypsum layer on the first gypsum layer,
- optionally a third gypsum layer on the second gypsum layer, and
- a second liner on the second gypsum layer, or if present, on the third gypsum layer,

wherein:

when the third gypsum layer is not present, then the first gypsum layer comprises a cross-linked silicone;
when the third gypsum layer is present, then at least one of the first and third gypsum layer comprises a cross-linked silicone.

15. The moisture-resistant plasterboard according to claim 14, wherein the second gypsum layer does not comprise cross-linked silicone.

**EP 4 635 926 A1**

# EUROPEAN SEARCH REPORT

**Application Number**

EP 24 30 5607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/018531 A1 (UNITED STATES GYPSUM CO [US]) 23 January 2020 (2020-01-23) | 1-8,10, 12-15 | INV. C04B24/42 |
| Y | * paragraphs [0027], [0044], [0045], [0049], [0057], [0059], [0062]; claims 1-3; figure 2 * | 11 | C04B28/14 B28B19/00 B32B13/04 |
| X | US 2023/128126 A1 (BLAND BRIAN [US] ET AL) 27 April 2023 (2023-04-27) * paragraphs [0008], [0013], [0041], [0057] - [0059], [0063] * | 1-10, 13-15 | ADD. C04B111/27 |
| Y | EP 2 508 340 A1 (UNITED STATES GYPSUM CO [US]) 10 October 2012 (2012-10-10) * paragraphs [0002], [0036] - [0038]; claims * | 11 | |
| A | WO 2015/185143 A1 (KNAUF GIPS KG [DE]) 10 December 2015 (2015-12-10) * page 8, last paragraph * | 1-15 | |
| A | US 2018/355605 A1 (NIIMI KATSUMI [JP] ET AL) 13 December 2018 (2018-12-13) * paragraphs [0146], [0154] * | 1-15 | **TECHNICAL FIELDS SEARCHED (IPC)** C04B B28B B32B |

The present search report has been drawn up for all claims

| Place of search | Date of completion of the search | Examiner |
|---|---|---|
| The Hague | 17 October 2024 | Theodoridou, K |

## ANNEX TO THE EUROPEAN SEARCH REPORT
## ON EUROPEAN PATENT APPLICATION NO.

EP 24 30 5607

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | Publication date | Patent family member(s) | Publication date |
|---|---|---|---|
| WO 2020018531 A1 | 23-01-2020 | US 2020024191 A1 | 23-01-2020 |
| | | WO 2020018531 A1 | 23-01-2020 |
| US 2023128126 A1 | 27-04-2023 | NONE | |
| EP 2508340 A1 | 10-10-2012 | AR 066224 A1 | 05-08-2009 |
| | | AU 2008216467 A1 | 21-08-2008 |
| | | CA 2676994 A1 | 21-08-2008 |
| | | CL 2008001145 A1 | 07-11-2008 |
| | | CN 101605654 A | 16-12-2009 |
| | | CN 102991013 A | 27-03-2013 |
| | | CO 6231015 A2 | 20-12-2010 |
| | | DK 2508340 T3 | 27-09-2021 |
| | | EP 2117828 A2 | 18-11-2009 |
| | | EP 2508340 A1 | 10-10-2012 |
| | | JP 3183641 U | 30-05-2013 |
| | | JP 5302218 B2 | 02-10-2013 |
| | | JP 5563686 B2 | 30-07-2014 |
| | | JP 2010517827 A | 27-05-2010 |
| | | JP 2013107404 A | 06-06-2013 |
| | | NZ 578554 A | 12-01-2012 |
| | | NZ 597323 A | 28-06-2013 |
| | | PL 2117828 T3 | 30-04-2013 |
| | | RU 146857 U1 | 20-10-2014 |
| | | RU 2525420 C1 | 10-08-2014 |
| | | RU 2009134228 A | 20-03-2011 |
| | | TW 200900234 A | 01-01-2009 |
| | | US 2008190062 A1 | 14-08-2008 |
| | | US 2012040168 A1 | 16-02-2012 |
| | | WO 2008100777 A2 | 21-08-2008 |
| WO 2015185143 A1 | 10-12-2015 | AR 100730 A1 | 26-10-2016 |
| | | AR 118003 A2 | 08-09-2021 |
| | | AU 2014396515 A1 | 15-12-2016 |
| | | CN 106470813 A | 01-03-2017 |
| | | CN 106471194 A | 01-03-2017 |
| | | DK 3152022 T3 | 30-08-2021 |
| | | EP 3152022 A1 | 12-04-2017 |
| | | EP 3152023 A1 | 12-04-2017 |
| | | ES 2887363 T3 | 22-12-2021 |
| | | JP 6791761 B2 | 25-11-2020 |
| | | JP 6872906 B2 | 19-05-2021 |
| | | JP 2017520427 A | 27-07-2017 |
| | | JP 2017525586 A | 07-09-2017 |
| | | PL 3152022 T3 | 13-12-2021 |
| | | PT 3152022 T | 24-09-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 5607

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | Publication date | Patent family member(s) | Publication date |
|---|---|---|---|
| | | UA      120515  C2 | 26-12-2019 |
| | | UA      122128  C2 | 25-09-2020 |
| | | WO  2015185143  A1 | 10-12-2015 |
| | | WO  2015185251  A1 | 10-12-2015 |
| US 2018355605   A1 | 13-12-2018 | AU  2016374211  A1 | 05-07-2018 |
| | | BR 112018011134  A2 | 21-11-2018 |
| | | CA     3007451  A1 | 22-06-2017 |
| | | CN   108367990  A | 03-08-2018 |
| | | EP     3392223  A1 | 24-10-2018 |
| | | ES     2895265  T3 | 18-02-2022 |
| | | JP     6840679  B2 | 10-03-2021 |
| | | JP WO2017104473  A1 | 18-10-2018 |
| | | KR  20180093926  A | 22-08-2018 |
| | | MY      188240  A | 24-11-2021 |
| | | PH  12018501238  A1 | 11-02-2019 |
| | | SA    518391788  B1 | 19-10-2021 |
| | | SG 11201804805Y  A | 30-07-2018 |
| | | TW     201725186  A | 16-07-2017 |
| | | TW     202130600  A | 16-08-2021 |
| | | US  2018355605  A1 | 13-12-2018 |
| | | WO  2017104473  A1 | 22-06-2017 |

EPO FORM P0459

For more details about this annex : see Official Journal of the European Patent Office, No. 12/82

page 2 of 2

**EP 4 635 926 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5135805 A
- US 5624418 A
- WO 9950200 A